# EUROPEAN PATENT APPLICATION

(11) **EP 2 843 530 A1**
(43) Date of publication of application: **04.03.2015**
(21) Application number: 14182319.5
(22) Date of filing: 26.08.2014
(51) Int. Cl.: G06F 3/0485, G06F 3/0484

(54) **Image display control device, image display control method, image display control program, and image display system**

(30) Priority: 03.09.2013 JP 2013181757
(71) Applicant: Fujifilm Corporation, Minato-ku Tokyo 106-8620 (JP)
(72) Inventor: Togawa, Koichiro, Tokyo, 107-0052 (JP)
(74) Representative: Klunker . Schmitt-Nilson . Hirsch

(57) **Abstract**

There are provided an image display control device, an image display control method, an image display control program, and an image display system that can efficiently select desired image information without spending a lot of time even if the amount of image information to be searched for is significantly large. In a standard scale obtained by matching the full range of the identification number with the entire position of a bar portion of a track bar, at a peripheral position of each slider, each identification number is assigned according to an enlarged scale that is larger than the standard scale. A selection range of the identification number is determined from the instruction position of the slider.

## Description

### BACKGROUND OF THE INVENTION

### 1. Field of the Invention

The present invention relates to an image display control device, an image display control method, an image display control program, and an image display system to select two or more pieces of image information from a plurality of pieces of image information to which identification numbers are granted and to perform preview display of the selected image information on a display device.

### 2. Description of the Related Art

Various techniques for selecting necessary image information from a plurality of pieces of image information stored in advance and performing preview display of the content have been proposed.

A method of changing the display target page of the finished image according to an instruction operation on the guide scale image has been proposed in JP2007-110677A (paragraphs [0019] and [0020], Fig. 6, and the like). In addition, JP2007-110677A describes that the scale of the guide scale image may be arranged so as to become exponentially narrow toward the outside from the inside.

A method of selecting an electronic document and the page through the bar control, which is a collection of a plurality of markers, has been proposed in US7100119B (Figs. 5 and 6B and the like). In addition, U.S. Pat. No. 7100119 describes that the width of the designated marker is made to be relatively great.

### SUMMARY OF THE INVENTION

Incidentally, if the amount of image information to be searched for is increased, the time for selecting the desired image information is increased accordingly. In the methods proposed in JP2007-110677A and US7100119B, however, it is difficult to finely adjust the current search position while checking the total amount of image information. As a result, there has been a problem in that a long time is required until desired image information is found and selected.

The invention has been made to solve the aforementioned problem, and it is an object of the invention to provide an image display control device, an image display control method, an image display control program, and an image display system that can efficiently select desired image information without spending a lot of time even if the amount of image information to be searched for is significantly large.

According to an aspect of the invention, there is provided an image display control device that selects two or more pieces of image information from a plurality of pieces of image information to which identification numbers are granted and performs preview display on a display device. The image display control device includes: a track bar creating section that creates display data of a track bar having a bar portion with a fixed length and a slider that is freely movable along an extending direction of the bar portion; an identification number allocation section that assigns each of the identification numbers according to a standard scale obtained by matching a full range of the identification number with an entire position of the bar portion; and a selection range determining section that determines a selection range of the identification number, which is assigned by the identification number allocation section, from an instruction position of the slider of the track bar displayed based on the display data created by the track bar creating section. The identification number allocation section assigns each of the identification numbers according to an enlarged scale, which is larger than the standard scale, at a peripheral position of the slider.

Thus, in the standard scale obtained by matching the full range of the identification number with the entire position of the bar portion of the track bar, at the peripheral position of the slider, each identification number is assigned according to the enlarged scale that is larger than the standard scale. Accordingly, it is possible to adjust the current search position finely in the enlarged scale region while checking the total amount of image information in the standard scale region. As a result, even if the amount of image information to be searched for is significantly large, it is possible to efficiently select the desired image information without spending a lot of time.

Preferably, the identification number allocation section sets the peripheral position when a specific input operation is received and assigns each of the identification numbers according to the enlarged scale at the peripheral position.

Preferably, the identification number allocation section assigns each of the identification numbers according to the standard scale when the slider is moved away from the peripheral position.

Preferably, the track bar creating section creates the display data by changing a width of the slider according to the number of possible displays of the image information.

Preferably, the track bar creating section creates the track bar in which a display form at the peripheral position is different from a display form at a residual position.

According to another aspect of the invention, there is provided an image display control method of selecting two or more pieces of image information from a plurality of pieces of image information to which identification numbers are granted and performing preview display on a display device. The image display control method causes a computer to execute: a creation step of creating display data of a track bar having a bar portion with a fixed length and a slider that is freely movable along an extending direction of the bar portion; an allocation step of assigning each of the identification numbers according to a standard scale obtained by matching a full range of the identification number with an entire position of the bar portion; and a determination step of determining a selection range of the assigned identification number from an instruction position of the slider of the track bar displayed based on the created display data. In the allocation step, each of the identification numbers is assigned according to an enlarged scale, which is larger than the standard scale, at a peripheral position of the slider.

According to still another aspect of the invention, there is provided an image display control program for selecting two or more pieces of image information from a plurality of pieces of image information to which identification numbers are granted and for performing preview display on a display device. The image display control program causes a computer to execute: a creation step of creating display data of a track bar having a bar portion with a fixed length and a slider that is freely movable along an extending direction of the bar portion; an allocation step of assigning each of the identification numbers according to a standard scale obtained by matching a full range of the identification number with an entire position of the bar portion; and a determination step of determining a selection range of the assigned identification number from an instruction position of the slider of the track bar displayed based on the created display data. In the allocation step, each of the identification numbers is assigned according to an enlarged scale, which is larger than the standard scale, at a peripheral position of the slider.

According to still another aspect of the invention, there is provided an image display system including: the image display control device described above; a storage device that stores a plurality of pieces of image information; and a display device that performs preview display of two or more pieces of image information that are selected from the plurality of pieces of image information stored in the storage device by the image display control device.

According to the image display control device, the image display control method, the image display control program, and the image display system according to the aspects of the invention, at the peripheral position of the slider in the standard scale obtained by matching the full range of the identification number with the entire position of the bar portion of the track bar, each identification number is assigned according to the enlarged scale that is larger than the standard scale. Accordingly, it is possible to adjust the current search position finely in the enlarged scale region while checking the total amount of image information in the standard scale region. As a result, even if the amount of image information to be searched for is significantly large, it is possible to efficiently select the desired image information without spending a lot of time.

### BRIEF DESCRIPTION OF THE DRAWINGS

Fig. 1 is a diagram showing the overall configuration of a print production system including an image display system according to an embodiment of the invention.
Fig. 2 is an electrical block diagram of a work station shown in Fig. 1.
Fig. 3 is a flowchart provided to explain the operation of the image display system shown in Fig. 1.
Fig. 4A is a schematic explanatory diagram for an identification number granting method.
Fig. 4B is a schematic explanatory diagram for a method of assigning an identification number according to the standard scale.
Fig. 5 is a first image diagram showing a preview screen of image information.
Fig. 6 is a second image diagram showing a preview screen of image information.
Figs. 7A and 7B are image diagrams showing a selection screen in Fig. 6.
Figs. 8A to 8C are image diagrams showing a temporal change of the selection screen when a specific input operation is executed.
Fig. 9 is a schematic diagram showing the determination result of the scale in the display forms shown in Figs. 8A to 8C.

### DESCRIPTION OF THE PREFERRED EMBODIMENTS

Hereinafter, for an image display control method according to the invention, an appropriate embodiment in the relationship with an image display control device, an image display control program, and an image display system to implement the image display control method will be described in detail with reference to the accompanying diagrams.

### [Diagram of the overall configuration of a print production system 10]

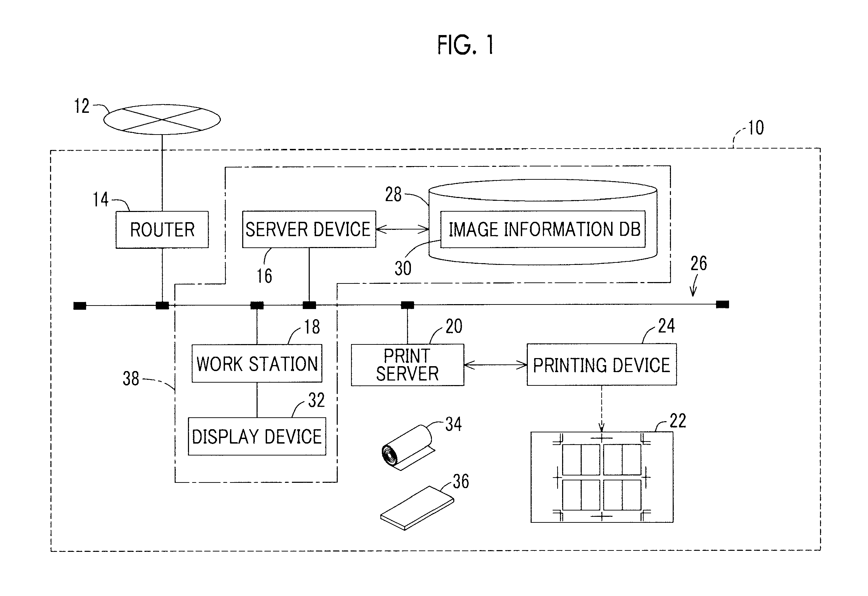

Fig. 1 is a diagram showing the overall configuration of the print production system 10 including an image display system 38 according to the present embodiment.

A router 14 that is a device for relaying the connection with a network 12, a server device 16 that can be accessed through the network 12 from each terminal device (not shown) belonging to an external network, a work station 18 (image display control device) that performs various kinds of information processing on the content data acquired from the server device 16 or the like, a print server 20 having a print processing function, and a printing device 24 that can form a print 22 based on the output data from the print server 20 are provided in the print production system 10.

The server device 16 is a device that forms the core of the workflow management in the print production system 10. The server device 16 is communicably connected to the work station 18 and the print server 20 through a local area network (LAN) 26 built in the print production system 10. The server device 16 may be communicably connected to each terminal device (not shown) of a designer or a production company through the router 14 and the network 12.

A storage device 28 that can store various kinds of data for the workflow is connected to the server device 16. For example, content data, output data (for example, plate making data, printing plate data, or calibration data), a job ticket (for example, a job definition format (JDF) file), a color profile, color sample data, and the like are stored in the storage device 28.

In the example shown in Fig. 1, a database regarding image information (hereinafter, referred to as an image information DB 30) is constructed in the storage device 28. The image information DB 30 is a collection of image information in units of a print job, a document, a page, or content, for example.

The work station 18 is a device that can create page-unit data (page data) after performing pre-flight processing on content data including a character, a graphic, a picture, a photograph, and the like. The work station 18 performs imposition processing according to a designated binding method or paper folding method with reference to the tag information of a job ticket.

A display device 32 that can display an arbitrary image for a variety of work is connected to the work station 18. The display method of the display device 32 may be not only liquid crystal, organic electro-luminescence (EL), and a cathode ray tube (CRT) but also a projector that projects an image onto the screen.

The print server 20 performs raster image processing (RIP) on the plate making data or the like subjected to imposition processing, and supplies the obtained output data to the printing device 24.

The printing device 24 outputs the print 22, in which an image is formed on a print medium 34, based on the output data supplied from the print server 20. Types of the print medium 34 include not only paper, such as synthetic paper, thick paper, and aluminum-evaporated paper, but also resin such as vinyl chloride and polyethylene terephthalate (PET), tarpaulin, and a metal sheet.

When the printing device 24 is a proof press, a direct digital color proofing (DDCP), an ink jet color proofer, a low-resolution color laser printer (electrophotographic type), an ink jet printer, and the like may be used.

When a printing device 24 is a relief printing press, the print 22 in which an image is formed on the print medium 34 is output by depositing the ink through a printing plate 36 and an intermediate transfer member (not shown).

When the printing device 24 is a digital printing press, the print 22 can be directly output without generating the printing plate 36. As a digital printing press, an ink jet printer, a wide format printer, an ink jet color proofer, a color laser printer, and the like may be used.

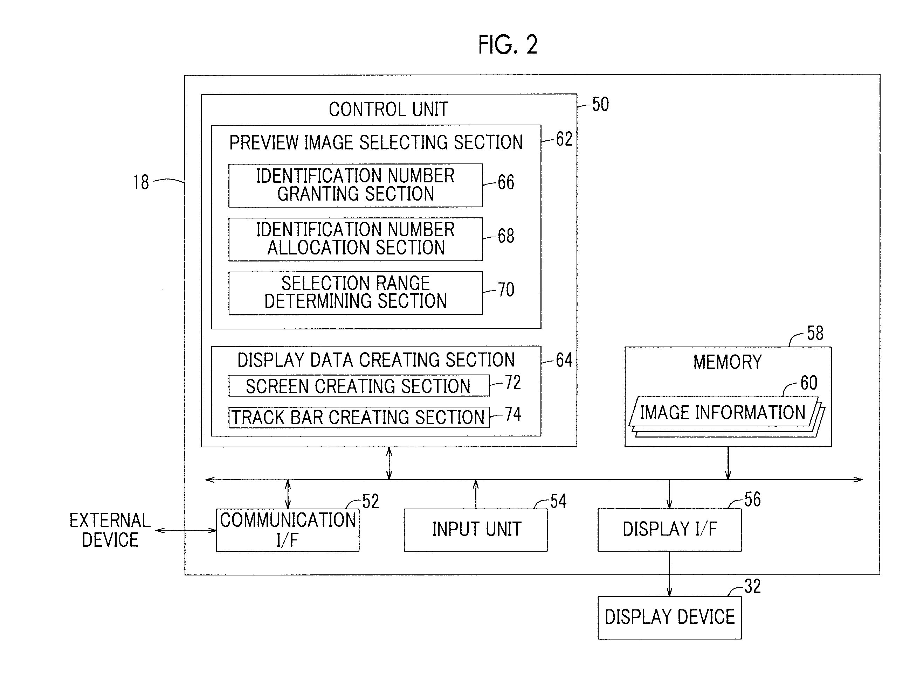

The server device 16, the work station 18, the storage device 28, and the display device 32 form the image display system 38 that selects two or more pieces of image information 60 (Fig. 2) from the image information DB 30 and performs preview display.

### [Electrical block diagram of the work station 18]

Fig. 2 is an electrical block diagram of the work station 18 shown in Fig. 1. The work station 18 is a computer that basically includes a control unit 50, a communication I/F 52, an input unit 54, a display I/F 56, and a memory 58 (storage medium).

The communication I/F 52 is an interface that transmits and receives electric signals to and from an external device. Thereby, the work station 18 can acquire various kinds of data (for example, a plurality of pieces of image information 60) from the server device 16 (Fig. 1).

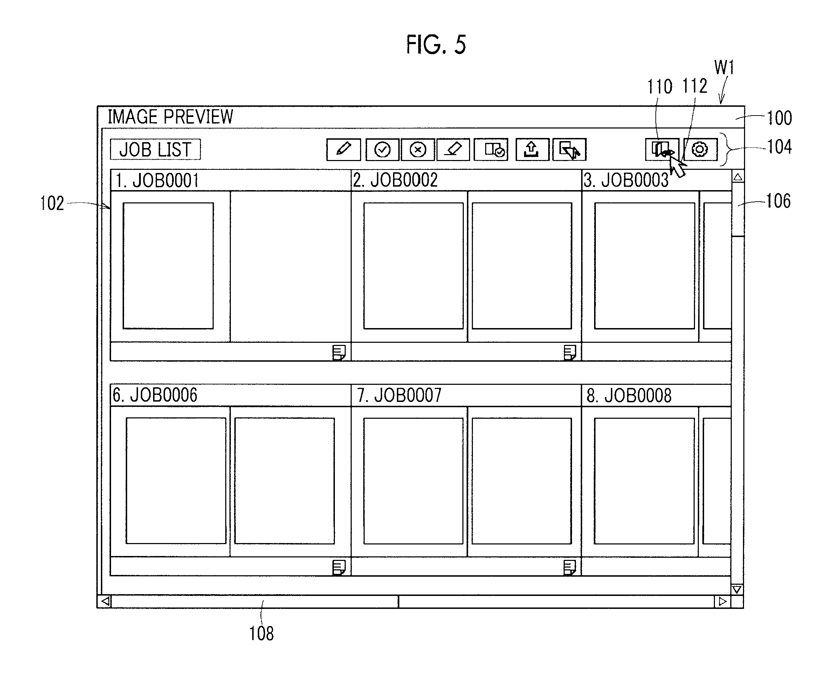

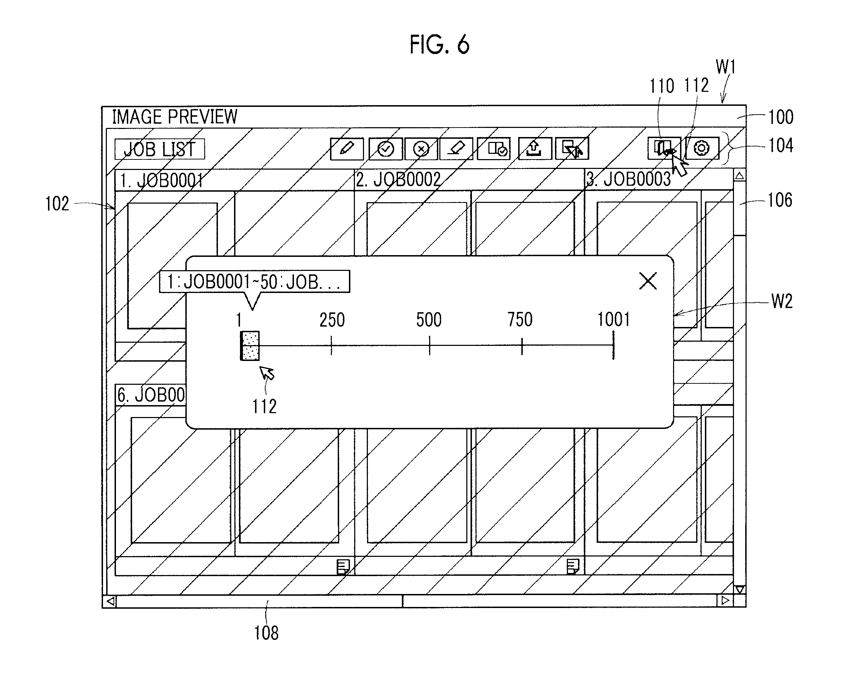

The input unit 54 includes various input devices, such as a mouse, a track ball, a keyboard, and a touch panel. The display I/F 56 is an interface for outputting a display control signal to the display device 32. Accordingly, the display device 32 can display various images including a window W1 (Fig. 5 or the like) and a window W2 (Fig. 6 or the like).

The memory 58 stores a program, data, and the like required when the control unit 50 controls each component. In this example shown in Fig. 2, a plurality of pieces of image information 60 from the image information DB 30 (Fig. 1) are stored.

The memory 58 may be a non-transitory and computer-readable storage medium. Here, computer-readable storage media are storage devices, such as portable media including a magneto-optical disc, a ROM, a CD-ROM, and a flash memory and a hard disk built in a computer system. The storage media may hold a program dynamically for a short period of time, or may hold a program for a fixed period of time.

The control unit 50 is configured to include an information processing device (so-called processor), such as a central processing unit (CPU). The control unit 50 can realize each function including a preview image selecting section 62 and a display data creating section 64 by reading and executing a program stored in the memory 58.

The preview image selecting section 62 selects two or more pieces of image information 60 provided for preview display according to an operation through the input unit 54. Specifically, the preview image selecting section 62 includes an identification number granting section 66 that grants an identification number to each of a plurality of pieces of image information 60, an identification number allocation section 68 that assigns an identification number according to the scale to be described later, and a selection range determining section 70 that selects a range of the identification number.

The display data creating section 64 creates display data provided for display of various images. Specifically, the display data creating section 64 includes a screen creating section 72, which creates a preview screen 100 (Fig. 5) or the like, and a track bar creating section 74, which creates a track bar control (hereinafter, simply referred to as a "track bar").

### [Operation of the image display system 38]

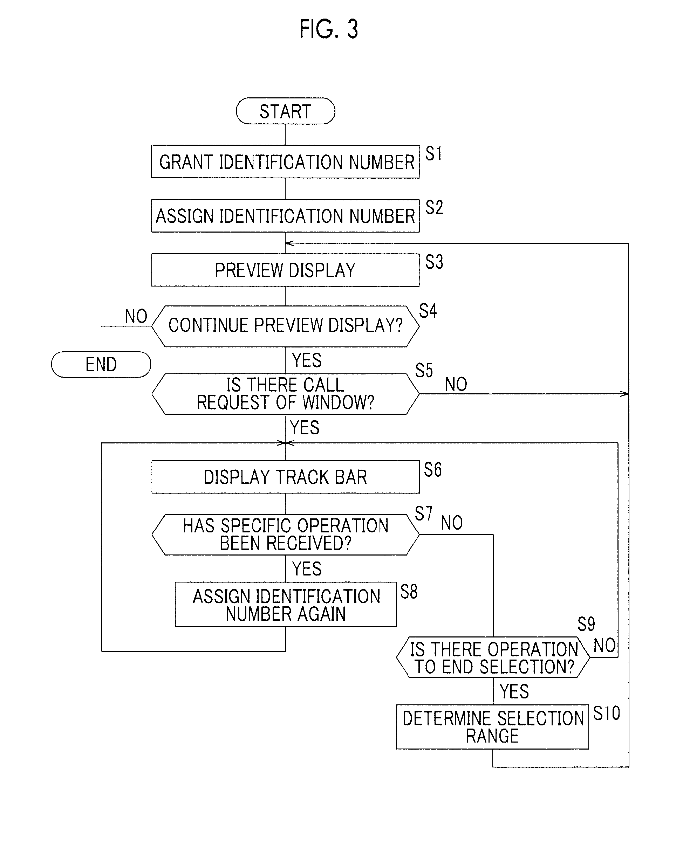

The image display system 38 according to the present embodiment is configured as described above. Subsequently, the operation of the image display system 38 (in particular, the work station 18) shown in Fig. 1 will be described in detail primarily with reference to the flowchart of Fig. 3.

In step S1, the identification number granting section 66 grants an identification number to each of a plurality of pieces of image information 60 registered in the image information DB 30. Hereinafter, the image information 60 having a "print job" as a basic unit will be described as an example.

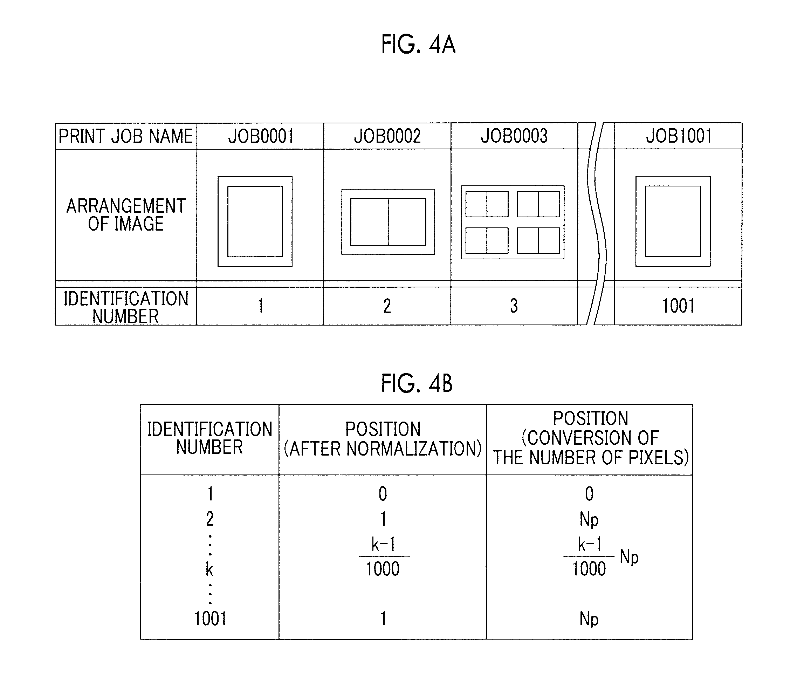

Fig. 4A is a schematic explanatory diagram for an identification number granting method. For example, 1001 print jobs having print job names of "JOB0001" to "JOB1001" are registered in the image information DB 30 (Fig. 1).

Here, the identification number granting section 66 may sort 1001 print jobs according to the arbitrary rules and grant identification numbers sequentially from 1. Examples of the sort key include a print job name, a customer name, a deadline, type of production, layout of the page, the number of copies to be printed, and printing conditions (item directly involved in the printing process or the metadata). In the example shown in Fig. 4A, a "print job name" is used as the sort key, and sorting in ascending order is performed. As a result, a minimum value (1) of identification numbers is granted to the print job "JOB0001", and a maximum value (1001) ofidentification numbers is granted to the print job "JOB1001"

In step S2, the identification number allocation section 68 assigns the identification numbers granted in step S1 according to a predetermined linear scale. Here, a scale (hereinafter, referred to as a standard scale) obtained by matching the full range of the identification number with the entire position is adopted.

Fig. 4B is a schematic explanatory diagram for a method of assigning an identification number according to the standard scale. When the position on the scale is normalized in [0, 1], the identification number allocation section 68 assigns a position "0" to the identification number 1 and assigns a position "1" to the identification number 1001. That is, when described in a general formula, a position "(k-1)/1000" is assigned to an identification number k (k = 1 to 1001).

Similarly, when the position is converted into a position [0, Np] (unit is the number of pixels) on the image, the identification number allocation section 68 assigns the position "0" (pixel) to the identification number 1 and assigns a position "Np" (pixel) to the identification number 1001. That is, when described in a general formula, a position "(k-1)Np/1000" (pixel) is assigned to the identification number k (k = 1 to 1001).

In step S3, the work station 18 performs preview display of a plurality of pieces of image information 60 on the display device 32. In response to an instruction to start the display, the screen creating section 72 creates display data of the preview screen 100 (Fig. 5) and then outputs the display data to the display I/F 56. As a result, the window W1 including the preview screen 100 is displayed on the display device 32.

As shown in Fig. 5, a preview column 102, which is a collection of the image information 60, and an icon group 104, which is configured to include a plurality of tool icons, are disposed on the preview screen 100.

In the preview column 102, a predetermined number of pieces (for example, 50 pieces) of image information 60 are disposed in a two-dimensional manner. In the initial setting, a preview display target is the image information 60 to which identification numbers of 1 to 50 are granted. The image information 60 (identification numbers 4, 5, and 9 to 50) other than the print jobs that are currently displayed can also be viewed by operating scroll bars 106 and 108. In addition, it is possible to add desired annotation information, calibration history, or the like to the position (specifically, each piece of image information 60) of the preview column 102 according to an operation through the icon group 104.

In step S4, the control unit 50 determines whether or not to continue the preview display in step S3. When the preview display continues (step S4: YES), the process proceeds to the next step (S5).

In step S5, the control unit 50 determines whether or not there is a call request of the window W2 (Fig. 6). Specifically, this determination is performed according to whether or not a clicking operation of the input unit 54 (Fig. 2) has been received in a state where a cursor 112 is located on the icon group 104 (specific icon 110). When there is no request (step S5: NO), the process returns to step S3 and the control unit 50 repeats the operation of steps S3 to S5 sequentially. In contrast, when there is a request (step S5: YES), the process proceeds to the next step (S6).

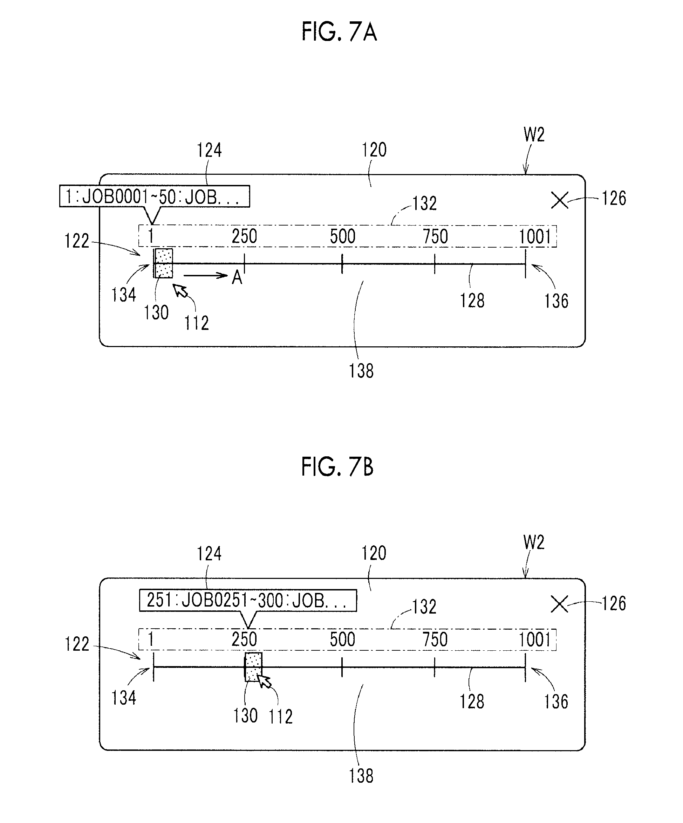

In step S6, the work station 18 displays a track bar 122 (Fig. 7A; window W2) on the display device 32. Prior to this display, the track bar creating section 74 creates display data of the track bar 122 according to the allocation result of the identification number allocation section 68. Then, the screen creating section 72 creates display data of a selection screen 120 (including the track bar 122) and outputs the display data to the display I/F 56. As a result, the window W2 including the selection screen 120 is displayed on the display device 32.

As shown in Fig. 6, the window W2 is displayed so as to overlap with an approximately central position of the window W1. In a state where the window W2 is displayed, the display state of the window W1 changes to "passive". In this example shown in Fig. 6, the preview column 102 and the icon group 104 are colored dark, and the control unit 50 temporarily disables an input operation through the window W1.

Figs. 7A and 7B are image diagrams of the selection screen 120 shown in Fig. 6. The track bar 122 for selecting the identification number, a balloon portion 124 present above the track bar 122, and an erase mark 126 for hiding the window W2 are disposed on the selection screen 120.

The track bar 122 is configured to include a bar portion 128 having a fixed length (or a variable length) and extending in one direction (in this example shown in Figs. 7A and 7B, a horizontal direction), a rectangular slider 130 provided on the bar portion 128, and a scale number 132 present above the bar portion 128.

The slider 130 is configured so as to be movable along the horizontal direction in a range from one end position 134 to the other end position 136 of the bar portion 128. The scale number 132 includes five numbers disposed at approximately equal intervals, specifically, "1", "250", "500", "750", and "1001".

"1" corresponding to the minimum value of identification numbers is written at the one end position 134 of the bar portion 128. "1001" corresponding to the maximum value of identification numbers is written at the other end position 136 of the bar portion 128. In other words, the entire bar portion 128 expresses a standard scale that linearly assigns the full range of the identification number. Hereinafter, a region expressing the standard scale of the image region including the track bar 122 is referred to as a standard scale region 138.

Character information regarding the indicated range of the slider 130 is written in the balloon portion 124. In the example shown in Fig. 7A, a lower limit (1) of the indicated range and the entire print job name "JOB0001" corresponding to the lower limit and an upper limit (50) of the indicated range and a part of the print job name "JOB0050" corresponding to the upper limit are written.

As shown in Fig. 7A, when a drag operation along the direction indicated by the arrow A is performed in a state where the cursor 112 is located at the position of the slider 130, the slider 130 and the balloon portion 124 are moved in the direction indicated by the arrow A so as to follow the cursor 112. Then, when a drop operation is performed, the movement of the slider 130 and the balloon portion 124 is stopped.

In this case, the content of the balloon portion 124 is immediately changed according to the stop position of the slider 130. In the example shown in Fig. 7B, a lower limit (251) of the indicated range and the entire print job name "JOB0251" corresponding to the lower limit and an upper limit (300) of the indicated range and a part of the print job name "JOB0300" corresponding to the upper limit are written.

In step S7 of Fig. 3, the control unit 50 determines whether or not a specific input operation has been performed. For example, this is determined according to whether or not a long pressing operation (long tap) on the slider 130 has been received. When there is an operation (step S7: YES), the process proceeds to the next step (S8).

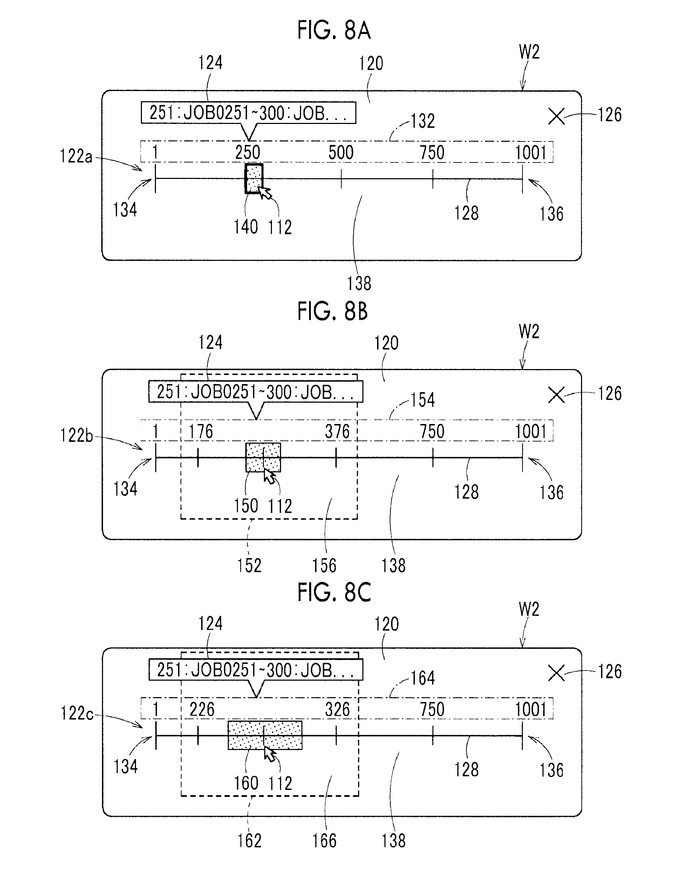

When a long pressing operation on the slider 130 is performed, the outline of a slider 140 in a track bar 122a is highlighted as shown in Fig. 8A. Then, when the long pressing operation is continued further, the display form of the track bar 122a is changed.

In step S8, the identification number allocation section 68 assigns some of the identification numbers granted in step S1 again according to the different scale from the standard scale. Specifically, the identification number allocation section 68 sets a peripheral position 152 (Fig. 8B) when a specific input operation is received, and assigns each identification number according to the enlarged scale, which will be described later, at the peripheral position 152. Then, the work station 18 displays a new track bar 122b on the display device 32 (step S6).

As shown in Fig. 8B, a track bar 122b is configured to include a bar portion 128, a wide slider 150, and a scale number 154 in which the value has changed at the peripheral position 152 (rectangular region surrounded by the dotted line) of the slider 150. As can be understood from Fig. 8B, the peripheral position 152 (a part of the bar portion 128) expresses a scale (hereinafter, referred to as an enlarged scale) enlarged to a predetermined magnification (here, two times) with respect to the standard scale. That is, an enlarged scale region 156 corresponds to a region, which expresses a doubly enlarged scale, of the image region including the track bar 122b.

Then, when the long pressing operation on the slider 150 is continued further, the display form of the track bar 122b is changed. Through the allocation processing (step S8) performed again by the identification number allocation section 68, the work station 18 displays a new track bar 122c on the display device 32 (step S6).

As shown in Fig. 8C, the track bar 122c is configured to include a bar portion 128, a wider slider 160, and a scale number 154 in which the value has changed at the peripheral position 162 (rectangular region surrounded by the dotted line) of the slider 160. As can be understood from Fig. 8C, the peripheral position 162 (a part of the bar portion 128) expresses an enlarged scale that is 4 times the standard scale. That is, an enlarged scale region 166 corresponds to a region, which expresses a fourfold enlarged scale, of the image region including the track bar 122c.

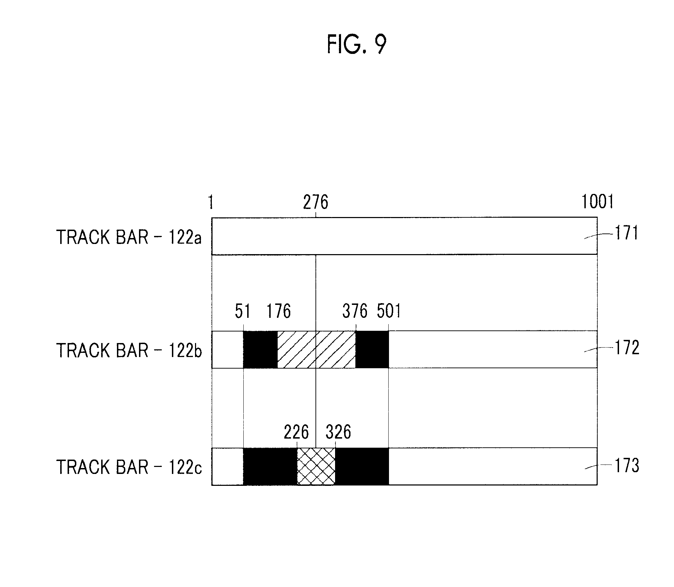

Fig. 9 is a schematic diagram showing the determination result of the scale in the display forms shown in Figs. 8A to 8C.

A bar graph 171 shows the scale in the display form shown in Fig. 8A. The full range shown by the graph, that is, the full range of identification numbers of 1 to 1001, is the standard scale (area without filling).

A bar graph 172 shows the scale in the display form shown in Fig. 8B. A range of identification numbers of 1 to 175 and 376 to 1001 of the full range shown by the graph is the standard scale. The range of the enlarged scale region 156 (Fig. 8B), that is, the range of identification numbers of 176 to 376, is a doubly enlarged scale (area of single hatching). The residual range is an object that is not to be displayed (area with filling).

A bar graph 173 shows the scale in the display form shown in Fig. 8C. A range of identification numbers of 1 to 175 and 376 to 1001 of the full range shown by the graph is the standard scale. The range of the enlarged scale region 166 (Fig. 8C), that is, the range of identification numbers of 226 to 326, is a fourfold enlarged scale (area of double hatching). The residual range is an object that is not to be displayed (area with filling).

Incidentally, in Figs. 8B and 8C, the designated range can be changed according to the scale extended twice and 4 times by moving the wide sliders 150 and 160 located at the peripheral position 152 and 162 in the horizontal direction. In other words, the operator can finely adjust the designated range.

The track bar creating section 74 may create display data by changing the width of each of the sliders 140, 150, and 160 according to the number of possible displays of the image information 60 (in the example shown in Fig. 5, 50 fixed values). The operator can check the designated range of the identification number at a glance based on the size of the width. In relation to this, the track bar creating section 74 may perform adjustment so as not to be less than the threshold value when changing the width of the slider 130 or the like. Thus, it is possible to prevent a situation where it becomes difficult to hold the slider 130 or the like.

In addition, the track bar creating section 74 may create display data by making the display form at the peripheral positions 152 and 162 different from the display form at the residual position. As a specific example of the display, a display form to emphasize the peripheral positions 152 and 162 (for example, to relatively increase the brightness and saturation or to give visual effects to call attention) can be mentioned. Thus, the operator can check the change of the scale at a glance based on the difference in the display form.

When another operation is received, the control unit 50 may perform control to end the display on the enlarged scale and return to the display form shown in Fig. 7B. As examples of "another operation", an operation of moving the slider 150 or 160 away from the peripheral position 152 or 162 and an operation of moving the cursor 112 to the outside of the window W2 can be mentioned.

Returning to step S7 of Fig. 3, when there is no specific input operation (long pressing operation on the slider 130) (step S7: NO), the control unit 50 determines whether or not there has been any operation to end the selection in step S9. For example, this is determined according to whether or not a clicking operation on the erase mark 126 (Figs. 7A to 8C) has been received. When there is no operation (step S9: NO), the process returns to step S6 and the control unit 50 repeats the operation of steps S6 to S9 sequentially.

In contrast, when there is an operation (step S9: YES), the process proceeds to the next step (S10). In this case, according to the clicking operation on the erase mark 126 (Fig. 7A or the like), the window W2 is not displayed, and the display state of the window W1 returns to "active" .

In step S10, the selection range determining section 70 determines the selection range of the identification number from the instruction position of the slider 130 or the like. Specifically, the selection range determining section 70 calculates the range (minimum and maximum values) of the identification number based on the position corresponding to the number of pixels of the slider 130 or the like and the correspondence relationship shown in Fig. 4B. In all of the examples shown in Figs. 8A to 8C, the range of identification numbers of 251 to 300 is determined as a selection range.

Then, the process returns to step S3, and the work station 18 performs preview display of a plurality of pieces of image information 60, to which the identification numbers within the selection range determined in step S10 are granted, on the display device 32. An object to be displayed in the preview column 102 (Fig. 5) is the image information 60 to which identification numbers of 251 to 300 are granted.

Then, the process returns to step S4 of Fig. 3, and the image display system 38 ends the operation regarding the preview display when the preview display is not continued (step S4: NO).

### [Effect of the present embodiment]

As described above, the work station 18 as an image display control device selects two or more pieces of image information 60 from a plurality of pieces of image information 60 (image information DB 30), to which identification numbers are granted, and performs preview display on the display device 32.

The work station 18 includes: the track bar creating section 74 that creates display data of the track bar 122 (the same as 122a to 122c) including the bar portion 128 with a fixed length and the slider 130 (the same as the sliders 140, 150, and 160) that is freely movable along the extending direction of the bar portion 128; the identification number allocation section 68 that assigns each of the identification numbers according to the standard scale; and the selection range determining section 70 that determines the selection range of the identification number from the instruction position of the slider 130 (the same as in the sliders 140, 150, and 160) of the track bar 122 (the same as in 122a to 122c) displayed based on the display data. The identification number allocation section 68 assigns each identification number according to the enlarged scale that is larger than the standard scale, instead of the standard scale, at the peripheral positions 152 and 162 of the sliders 150 and 160.

In addition to the work station 18 described above, the image display system 38 includes the storage device 28 that can store a plurality of pieces of image information 60 and the display device 32 that performs preview display of two or more selected pieces of image information 60.

By adopting such a configuration, it is possible to finely adjust the current search position in the enlarged scale regions 156 and 166 while checking the total amount of image information in the standard scale region 138. Therefore, even if the amount of image information 60 to be searched for is significantly large, it is possible to efficiently select the desired image information 60 without spending a lot of time.

### [Supplement]

This invention is not limited to the embodiment described above, and various changes can be freely made without deviating from the subject matter of this invention.

For example, the forms of the track bars 122a to 122c are not limited to the examples shown in Fig. 7A and the like, and any configuration can be adopted as long as the range (lower and upper limits) of the identification number can be specified.

In addition, applications of the image information 60 are not limited to the production of the print 22, and may be production, viewing, and the like of various produced materials (electronic data, distribution service by streaming, and the like) provided for e-commerce.

## Claims

1. An image display control device that selects two or more pieces of image information from a plurality of pieces of image information to which identification numbers are granted and performs preview display on a display device, the device comprising:
a track bar creating section that creates display data of a track bar having a bar portion with a fixed length and a slider that is freely movable along an extending direction of the bar portion;
an identification number allocation section that assigns each of the identification numbers according to a standard scale obtained by matching a full range of the identification number with an entire position of the bar portion; and
a selection range determining section that determines a selection range of the identification number, which is assigned by the identification number allocation section, from an instruction position of the slider of the track bar displayed based on the display data created by the track bar creating section,
wherein the identification number allocation section assigns each of the identification numbers according to an enlarged scale, which is larger than the standard scale, at a peripheral position of the slider.

2. The image display control device according to claim 1,
wherein the identification number allocation section sets the peripheral position when a specific input operation is received, and assigns each of the identification numbers according to the enlarged scale at the peripheral position.

3. The image display control device according to claim 2,
wherein the identification number allocation section assigns each of the identification numbers according to the standard scale when the slider is moved away from the peripheral position.

4. The image display control device according to any one of claims 1 to 3,
wherein the track bar creating section creates the display data by changing a width of the slider according to the number of possible displays of the image information.

5. The image display control device according to any one of claims 1 to 4,
wherein the track bar creating section creates the track bar in which a display form at the peripheral position is different from a display form at a residual position.

6. An image display control method of selecting two or more pieces of image information from a plurality of pieces of image information to which identification numbers are granted and performing preview display on a display device, the method causing a computer to execute:
a creation step of creating display data of a track bar having a bar portion with a fixed length and a slider that is freely movable along an extending direction of the bar portion;
an allocation step of assigning each of the identification numbers according to a standard scale obtained by matching a full range of the identification number with an entire position of the bar portion; and
a determination step of determining a selection range of the assigned identification number from an instruction position of the slider of the track bar displayed based on the created display data,
wherein, in the allocation step, each of the identification numbers is assigned according to an enlarged scale, which is larger than the standard scale, at a peripheral position of the slider.

7. An image display control program for selecting two or more pieces of image information from a plurality of pieces of image information to which identification numbers are granted and for performing preview display on a display device, the program causing a computer to execute:
a creation step of creating display data of a track bar having a bar portion with a fixed length and a slider that is freely movable along an extending direction of the bar portion;
an allocation step of assigning each of the identification numbers according to a standard scale obtained by matching a full range of the identification number with an entire position of the bar portion; and
a determination step of determining a selection range of the assigned identification number from an instruction position of the slider of the track bar displayed based on the created display data,
wherein, in the allocation step, each of the identification numbers is assigned according to an enlarged scale, which is larger than the standard scale, at a peripheral position of the slider.

8. An image display system, comprising:
the image display control device according to any one of claims 1 to 5;
a storage device that stores a plurality of pieces of image information; and
a display device that performs preview display of two or more pieces of image information that are selected from the plurality of pieces of image information stored in the storage device by the image display control device.
